Europäisches Patentamt

European Patent Office

Office européen des brevets

(19)

(11) Veröffentlichungsnummer: **0 016 398**
**B1**

## (12) EUROPÄISCHE PATENTSCHRIFT

(45) Veröffentlichungstag der Patentschrift:
02.01.85

(21) Anmeldenummer: 80101221.2

(22) Anmeldetag: 10.03.80

(51) Int. Cl.³: **B 44 C 3/08**, B 32 B 27/00

(54) **Verfahren zur Aufbringung einer Dekorschicht auf eine Trägerplatte.**

(30) Priorität: 15.03.79 DE 2910234

(43) Veröffentlichungstag der Anmeldung:
01.10.80 Patentblatt 80/20

(45) Bekanntmachung des Hinweises auf die Patenterteilung:
02.01.85 Patentblatt 85/1

(84) Benannte Vertragsstaaten:
AT BE CH DE FR GB IT LU NL SE

(56) Entgegenhaltungen:
EP - A - 0 001 246
DE - A - 1 621 940
DE - A - 2 315 741
DE - A - 2 650 628
US - A - 3 354 020

(73) Patentinhaber: Alkor GmbH Kunststoffverkauf,
Morgensternstrasse 9 Postfach 71 0109,
D-8000 München 71 (DE)

(72) Erfinder: Landler, Josef, Schiesstädtstrasse 84,
D-8910 Wolfsratshausen (DE)
Erfinder: Mayr, Max, Frank-Caro-Strasse 63,
D-8261 Hart/Alz (DE)

(74) Vertreter: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)

## Beschreibung

Die Erfindung betrifft ein Verfahren nach dem Oberbegriff des Anspruchs 1.

Ein solches Verfahren ist in der EP-A-14 973, die nach Artikel 54(3) und (4) EPÜ zum Stand der Technik gehört, vorgeschlagen. Bei dem Verfahren wird als Dekorschicht eine thermoplastische Folie z. B. PVC-Folie verwendet. Auf diese thermoplastische Folie wird unter Vermittlung eines Flockklebstoffs eine Flockschicht elektrostatisch aufgetragen, worauf der Flockklebstoff getrocknet wird. Dieses Verbundmaterial ist noch hinreichend flexibel und wird zusammen mit einer thermoplastisches Bindemittel enthaltenden erhitzten Trägerplatte in einem Preßwerkzeug verformt. Bei dieser Verformung werden die Flockfasern in dem Bindemittel der Trägerplatte verankert und der Flockklebstoff härtet nach. Gleichzeitig kann durch die Flockschicht ein Ausgleich von etwa zwischen die Trägerplatte und die thermoplastische Folie eingeschlossener Luftblasen erfolgen.

Das Verfahren hat sich im großen und ganzen gut bewährt. Insbesondere wurde durch die Flockschicht eine gute Haftung zwischen der Trägerplatte und der thermoplastischen Folie erreicht. Es hat sich jedoch gezeigt, daß unter extremen Temperaturbelastungen im Gebrauch wegen den von der Verformung herrührenden Spannungen in der thermoplastischen Folie immer noch Ablösungserscheinungen auftreten können.

Aus der DE-A-2 650 628 ist ein Verfahren zur Herstellung eines räumlich geformten Formkörpers bekannt, bei den auf eine ein thermoplastisches Bindemittel enthaltende Trägerplatte im erwärmten Zustand ein gut verformbares Faservlies unter hohem Druck aufgepreßt und die Trägerplatte mit dem Faservlies unter hohem Druck aufgepreßt und die Trägerplatte mit dem Faservlies zusammen verformt und hierauf eine termoplastische Kunststoffolie als Dekorschicht auf die Vliesseite der verformten Platte mittels eines Haftvermittlers aufgebracht wird. Die Kunststoff-Folie kann aus Kunststoffschaum bestehen. Dieses Verfahren erfordert die Anwendung von Klebstoff beim Herstellen des Formkörpers. Ferner ist im allgemeinen eine gesonderte Vorverformung der thermoplastischen Folie zur Anpassung an die Form der ausgeformten Trägerplatte erforderlich. Wird eine solche Vorverformung der Folie nicht angewandt, sondern versucht, die flachliegende Folie auf die vorgeformte Trägerplatte aufzubringen, so besteht in hohem Maße die Gefahr der Faltenbildung und so großer Lufteinschlüsse, daß sie durch das Vlies kaum mehr ausgeglichen werden können.

Sowohl beim Verfahren nach der EP-A-14 973 als auch beim Verfahren nach der DE-OS 2 650 628 wird für die Trägerplatte ein Material eingesetzt, das einen Polyolefin-Kunststoff, insbesondere Polypropylen, als Bindemittel und feinteiliges Holz, z. B. Holzmehl, als Füllstoff enthält.

Aus der CH-B-578 422 ist ein Verfahren zum Beschichten von textilen Flächengebilden bekannt, bei dem eine wäßrige Latex-Mischung mit einem Gehalt an Härtungsmittel und Schäummittel als gleichmäßige Schaumschicht auf das Flächengebilde aufgetragen wird, die Schaumschicht hierauf unterhalb der Aktivierungstemperatur des Härtungsmittels getrocknet und sodann bei einer höheren Temperatur unter Aktivierung des Härtungsmittels und Härtung der Latex-Mischung geprägt wird. Es ist nicht vorgesehen, das Verbundmaterial als Dekorschicht auf einer räumlich geformten Trägerplatte aufzubringen.

Aus der DE-A-1 621 940 ist ein Verfahren zur Herstellung einer überzogenen Unterlage mit einem anhaftenden Überzug aus einer gepreßten, polymeren Schaumschicht bekannt. Als Unterlage wird insbesondere ein Textiltuch verwendet. Bei diesem Verfahren wird eine emulsionspolymerisierte Latexzusammensetzung, die ein wasserlösliches, organisches oberflächenaktives Mittel enthält, aufgeschäumt und der sich ergebende polymere Schaum direkt auf die Unterlage aufgebracht. Der Schaum wird sodann zusammen mit der Unterlage teilgetrocknet, wobei er beim Trocknen seine ausgedehnte Form beibehält. Der teilweise getrocknete Schaum wird hierauf gepreßt, und anschließend wird die mit dem gepreßten Schaum überzogene Unterlage getrocknet und der Schaum gehärtet. Es wird dabei ein übermäßig starkes Eindringen des Schaums in die Oberfläche der textilen Unterlage vermieden. Als Schäume werden auch solche auf Acrylsäurebasis genannt. Der Zusatz von Schaumstabilisatoren ist erwähnt. Auch bei diesem Verfahren ist eine Verwendung des erhaltenen, aus Unterlage und Schaumüberzug bestehenden Verbundmaterials als Dekorschicht auf einer räumlich geformten Trägerplatte nicht vorgesehen.

Aus der DE-A-2 111 748 ist ein Verfahren zur Herstellung einer Verbundplatte aus Kunststoff und Metall unter Verwendung eines haftvermittelnden Klebstoffs bekannt, bei dem zwischen Metall und Kunststoff zusätzlich zum Klebstoff eine Faserschicht vorgesehen wird, die beim Zusammenpressen der Schichten unter Wärme vom Kunststoff bzw. Klebstoff durchdrungen wird. Die Faserschicht kann aus einem Faservlies bestehen und zusammen mit der Klebstoff-Folie vor dem Herstellen der Verbundplatte auf eine der zu verbindenden Schichten aufkaschiert sein. Die Faserschicht bewirkt, daß Luft beim Zusammenpressen der zu verbindenden Schichten entweichen oder wenigstens in ihr fein verteilt und somit wirkungslos wird.

Der Erfindung liegt deshalb die Aufgabe zugrunde, das Verfahren nach der EP-A-14 973 dahingehend weiterzubilden, daß im Gebrauch, insbesondere unter hohen Temperaturbelastungen, eine noch bessere Stabilität erreicht wird und Ablösungserscheinungen, insbesondere in konkaven Flächenbereichen, noch besser vermieden werden.

Gegenüber dem nächstkommenden vorveröffentlichten Stand der Technik nach der DE-A-2 650 628 liegt die Aufgabe vor, die Arbeit für den Hersteller des Formkörpers zu vereinfachen und eine gesonderte Vorverformung der Dekorschicht zu vermeiden und dabei dennoch die Gefahr großer Lufteinschlüsse und der Faltenbildung zu vermeiden.

Die Aufgaben sind gemäß der Erfindung mit den im kennzeichenden Teil des Patentanspruchs 1 angegebenen Maßnahmen gelöst.

Bei einem nach dem erfindungsgemäßen Verfahren hergestellten Formteil besteht keine Tendenz zu Ablösungserscheinungen der Schaumstoffschicht von der Trägerplatte, nicht einmal in konkav gekrümmten Oberflächenbereichen, weil die ausgehärtete und vernetzte Schaumstoffschicht wegen Temperaturbelastungen stabil ist.

Überdies wird durch die Ausbildung der Dekorschicht als Schaumstoffschicht die Möglichkeit geboten, daß sich etwaige Luftblasen, soweit sie sich durch die Faserschicht nicht vollständig ausgleichen können, durch die Schaumstoffschicht hindurch abziehen können. Dabei ist der Anteil des Luftblasenausgleichs durch die Faserschicht und des Luftblasenabzugs durch die Schaumstoffschicht hindurch von der jeweiligen Rezeptur abhängig, d. h. insbesondere von der Struktur und Stärke der Faserschicht einerseits und der Struktur und Stärke der Schaumstoffschicht andererseits.

Dadurch, daß der vorgebildete Schaum nur teilweise in die Bahn eindringt und die Bahn auch selbst ohne wesentliche Rückstellkräfte räumlich gut verformbar ist, ist gewährleistet, daß das aus Bahn und Schaumschicht gebildete Verbundmaterial bis zu dem Preßvorgang räumlich gut verformbar bleibt.

Für die Haftung der Schaumschicht an der Bahn ist das oberflächliche Eindringen des Schaumes in die Bahn wesentlich; es ist aber nicht erwünscht, daß der Schaum schon bei der Auftragung auf die Bahn diese vollständig durchdringt; ein vollständiges Durchdringen der Bahn würde nämlich dazu führen, daß die Anschmiegsamkeit des Verbundmaterials an kompliziertere räumliche Flächen erheblich leidet, so daß beim nachträglichen Aufbringen des Verbundmaterials auf die Trägerplatte und beim nachträglichen Verformen Schwierigkeiten auftreten können.

Acrylatschaum hat sich deshalb als besonders geeigneter Kunststoffschaum für die Durchführung des erfindungsgemäßen Verfahrens erwiesen (Anspruch 2), weil er bei Temperaturen, die für die Schaumschicht selbst und für die technisch und wirtschaftlich in Frage kommenden Trägerplatten verträglich sind, getrocknet, vernetzt und mit den Trägerplatten verbunden werden kann. Einen solchen Acrylatschaum kann man gemäß Anspruch 3 insbesondere durch Aufschäumen wäßriger Dispersionen thermisch vernetzbarer Polyacrylsäureester herstellen. Als Vernetzungsmittel für diese Polyacrylsäureester kommen insbesondere ammoniakalische Vernetzungsmittel, z. B. Ammoniak in Frage. Dieser wäßrigen Dispersion können Verdicker und/oder Verschäumer und/oder Schaumstabilisatoren und/oder Farbpigmente und/oder übliche Füller, wie Kaolin, Talkum und Kalziumkarbonat zugesetzt werden. Wegen geeigneter Zusätze wird im einzelnen auf die Beispiele verwiesen. Auch kann man der wäßrigen Dispersion des thermisch vernetzbaren Polyacrylsäureesters zusätzliche Harze beifügen, z. B. eine wäßrige Dispersion eines Äthylenharnstoff/Triazin-Harzes.

Im Hinblick auf die Vereinfachung der Verarbeitung und auf die Beständigkeit des Endproduktes wird die Aufschäumung gemäß Anspruch 4 des Kunststoffschaums im wesentlichen durch mechanische Behandlung bewirkt; die Schaumstabilisatoren sorgen dafür, daß der Schaum während des Auftragens auf der Dekortägerbahn und während der anschließenden Verarbeitungsstufen bis zur ausreichenden Vernetzung als Schaum erhalten bleibt.

Faservliese, wie Synthesefaservliese, insbesondere Polyesterspinnvliese und Polypropylenfaservliese sind typische Vertreter von verwendbaren Bahnen (Anspruch 5), bei denen keine Ablösungserscheinungen zu befürchten sind, auch dann nicht, wenn eine starke dreidimensionale Verformung an Flächen höherer Ordnung stattfindet, also an Flächen, die weder plan noch zylindrisch noch prismatisch sind, sondern z. B. Sattelstellen aufweisen.

Die Verwendung von Polyesterspinnvliesbahnen ist insbesondere dann wünschenswert, wenn eine hohe Temperaturbeständigkeit bei den im Zuge der Weiterverarbeitung und auch bei den im Betrieb zu erwartenden Temperaturen absolut dimensionsstabil sind. Polypropylenfaservliesbahnen sind wegen ihres niedrigeren Preises interessant. Auch wird man dann gerne Polypropylenfaservliesbahnen verwenden, wenn als Trägerplatten polypropylenhaltige Platten verwendet werden, weil man dann die chemische Affinität der Polypropylenfaservliesbahnen zu dem Polypropylen der Platten für die Herstellung des Verbundes zwischen Dekorschicht und Trägerplatte ausnutzen kann.

Um bei besonders hohen Ansprüchen an den Verbund ein übriges zu tun, kann gemäß Anspruch 6 eine Vliesbahn verwendet werden, in welcher mindestens ein Teil der Fasern sich senkrecht zur Bahnebene erstreckt, so daß die Faserenden gute Verankerungsmöglichkeiten finden. Diese Voraussetzung ist insbesondere bei Nadelvliesbahnen erfüllt.

Als Trägerplatten kommen gemäß Anspruch 7 insbesondere Platten in Frage, welche unter Verwendung eines Polyolefins als Bindemittel und eines Cellulosematerials als Füller hergestellt worden sind. Als typische Vertreter der letzteren Art von Platten seien Trägerplatten genannt, die aus 50 Gew.-% Polypropylen und 50 Gew.-% Holzmehl hergestellt sind; dies ist ein in der Praxis bewährter Vertreter der sogenannten POHM-Platten = Polyolefin-Holzmehl-Platten.

Man kann die Verbindung des Faservlieses mit der Trägerplatte dadurch herstellen, daß man gemäß Anspruch 8 auf der Rückseite der Dekorträgerbahn und/oder auf der Dekorseite der Trägerplatte einen Haftvermittler aufträgt, beispielsweise einen Zweikomponentenkleber, welcher nach dem Auftragen auf die jeweilige Fläche durch die bei der Verpressung angewandte Temperatur aktiviert werden kann. Eine besonders vorteilhafte Weiterbildung wird aber gemäß Anspruch 9 darin gesehen, daß man unter Verzicht auf einen Haftvermittler die Verbindung des Faservlieses mit der Trägerplatte durch die Adhäsion des Faservlieses an der Trägerplatte bewirken kann. Auf die Kleberschichtung will man deshalb nämlich gerne verzichten, weil diese Kleberbeschichtung häufig im Werk des Verarbeiters stattfinden müßte, damit der Kleber beim Verpressen noch hitzeaktivierbar ist. Auch will man die Kleberbeschichtung deshalb gerne vermeiden, weil die kleberbeschichteten Zuschnitte des Verbundmaterials und der Trägerplatte nicht ohne die Gefahr eines Aneinanderhaftens übereinanderfolgender Lagen gestapelt werden können.

Die Prägebehandlung zur Erzeugung beispielsweise einer ledernarbenartigen Prägung kann bereits nach der ersten, die Trocknung bewirkenden Wärmebehandlung an der Schaumoberfläche vorgenommen werden, etwa mit heißen Prägewalzen gemäß Anspruch 10. Es hat sich gezeigt, daß durch die nachfolgende Verpressung die von der vorangehenden Prägebehandlung herstammende Feinstruktur nicht oder nur unwesentlich beeinflußt wird; im Einzelfall lassen sich die notwendigen Trocknungs- und Vernetzungsbedingungen der ersten Wärmebehandlung und der späteren Wärmebehandlung in der Presse durch einfache Vorversuche so bestimmen, daß nach der ersten Wärmebehandlung noch eine ausreichende Prägbarkeit gegeben ist, andererseits aber in der zweiten Wärmebehandlung bei der Verpressung die bereits bestehende Prägung nicht wieder zerstört wird. Zweckmäßig wird man, wenn unmittelbar nach der ersten Wärmebehandlung eine Prägung stattgefunden hat, beim späteren Pressen ein kaltes Preßwerkzeug verwenden, um die Beeinflußung der bereits bestehenden Prägung durch das Preßwerkzeug möglichst zu vermeiden.

Es ist aber gemäß Anspruch 11 auch möglich, eine Prägung der Oberfläche mit einer Feinstruktur erst beim Verpressen der Trägerplatte und der Dekorschicht vorzunehmen; man wird in diesem Falle in der Presse ein zumindest auf der Dekorseite heißes Prägewerkzeug verwenden. Auch hier gilt wieder, daß man die einzelnen Verfahrensbedingungen, die der ersten Erwärmung und in der späteren Wärmebehandlung während des Pressens anzuwenden sind, durch einfache Vorversuche leicht ermitteln kann. In jedem Falle der Prägung erhält man einen besonders exakten Abdruck der Struktur des Prägewerkzeugs; dies deshalb, weil keine elastischen Rückstellkräfte auftreten, wie sie beim Prägen von thermoplastischen Bahnen auch bei Temperaturen oberhalb des Plastifizierungspunkts nicht immer zu vermeiden sind.

Das Prägen in der Presse, in welcher auch die dreidimensionale Verformung stattfindet, hat sich deshalb als besonders attraktiv erwiesen, weil man dann die mit Prägung zu versehenden Oberflächen mit bestimmten Oberflächenbereichen des dreidimensionalen Gebildes koinzidieren lassen kann, beispielsweise Steppnähte oder Faltenwürfe mit Kanten der dreidimensionalen Verformung zusammenfallen lassen kann.

Sollte es sich erweisen, daß die Verbindung der Dekorschicht mit einer unbeschichteten Trägerplatte nicht ohne weiteres zur gewünschten Haftung führt, so ist es möglich, die Trägerplatte mit einer thermoplastischen Haftvermittlerschicht auszuführen, vorzugsweise aus dem gleichen Material, das auch als Bindemittel innerhalb der Trägerplatte eingesetzt ist.

Das nach dem erfindungsgemäßen Verfahren erhaltene Produkt fühlt sich wegen der schaumartigen Konsistenz der Dekorschicht auch nach dem Vernetzen polsterartig an, was insbesondere für die Herstellung von Automobilinnenverkleidungsteilen erwünscht ist.

Es hat sich gezeigt, daß die Schäume in verschiedenster Weise eingefärbt werden können, indem man der flüssigen Dispersion die entsprechenden Farbstoffe oder Farbpigmente zusetzt.

Auch hat es sich gezeigt, daß man den erfindungsgemäß zur Anwendung kommenden Schaum sehr hoch mit Füller anreichern kann, was aus Gründen der Wirtschaftlichkeit erwünscht ist.

Zur Art der in Frage kommenden Füllstoffe ist noch nachzutragen, daß alle üblichen Füllstoffe für Kunststoffschäume geeignet sind, insbesondere Kaolin, Talkum und Calciumcarbonat; diese Füllstoffe werden vor ihrer Zugabe auf einem Walzenstuhl abgerieben und in Wasser angeteigt.

Die beiliegenden Figuren erläutern die Erfindung. Es stellen dar

Fig. 1 das Schema einer Anlage zur Herstellung einer Dekorschicht für das erfindungsgemäße Verfahren,

Fig. 2 eine Presse zum vereinigen einer Trägerplatte mit einer Dekorschicht und

Fig. 3 einen Schnitt durch eine nach dem erfindungsgemäßen Verfahren mit einer Dekorschicht versehene Trägerplatte.

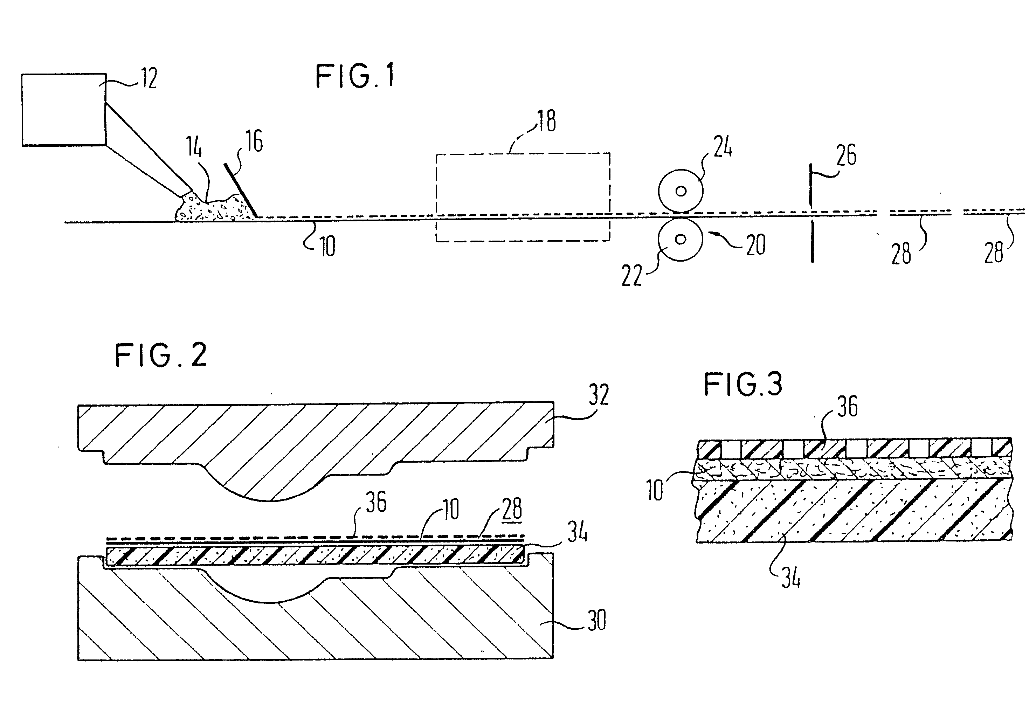

In Fig. 1 ist mit 10 eine Dekorträgerbahn bezeichnet. Über diese Trägerbahn ist eine Aufschäumvorrichtung 12 angeordnet, aus welcher der Schaum 14 auf die Dekorträgerbahn 10 gelangt. Eine Rakelvorrichtung 16 breitet den Schaum auf der Dekorträgerbahn 10 zu einer Schicht von gleichmäßiger Dicke aus. In einem Heiztunnel 18 wird der Schaum einer ersten Wärmebehandlung unterworfen, wobei er getrocknet und teilweise vernetzt wird. In einer Prägestation 20 mit einer Unterwalze 22 und einer Prägewalze 24 wird in die Oberseite des getrockneten und teilweise vernetzten Schaums ein feinstrukturiertes Prägemuster eingeprägt. In einer Schneidestation 26 wird die Dekorschicht zu einzelnen Zuschnitten 28 zerschnitten.

In der Fig. 2 erkennt man eine Presse mit einem Unterwerkzeug 30 und einem Oberwerkzeug 32. In das Unterwerkzeug 30 ist ein Zuschnitt 34 einer aus 50% Polypropylen und 50% Holzmehl bestehenden POHM-Platte eingelegt. Auf diesem Zuschnitt 34 liegt ein Zuschnitt 28 einer Dekorschicht auf, die gemäß Fig. 1 hergestellt worden ist und aus Trägerbahn 10 und Schaumschicht 36 besteht. Die Trägerplatte 34 ist auf eine Temperatur von 180°C eingestellt. Die Werkzeuge 30 und 32 sind kalt. In Fig. 3 erkennt man einen ebenen Flächenausschnitt aus der verformten Verbundplatte, welche in der Presse gemäß Fig. 2 gewonnen wurde.

Zur weiteren Erläuterung der Erfindung dienen die nachfolgenden Verfahrensbeispiele. Zunächst kommen einige Beispiele für die stoffliche Zusammensetzung des Beschichtungsmaterials; anschließend einige Beispiele für die Bearbeitung.

Beispiele für die stoffliche Zusammensetzung des Beschichtungsmaterials:

### Beispiel 1

100 Gew.-Teile einer 45%igen wäßrigen Dispersion eines thermisch vernetzbaren Polyacrylsäureesters, mit der Bezeichnung »Dicrylan AM« gemäß Pfersee Rezeptdienst A 423/3-76/62-167, Seiten 1—10 der Firma Chemische Fabrik Pfersee GmbH, Augsburg, wurden in ein Mischgefäß mit Rührwerk gegeben.

In dieses Gefäß wurde sodann nacheinander in der Reihenfolge der Aufzählung eingerührt:

1,2 Gew.-%Teile Laurylsulfat, welches unter der Bezeichnung Dicrylan-Verschäumer 7028 gemäß Pfersee Information ID 707 a/6-78/62, Seiten 1—12 der Firma Chemische Fabrik Pfersee GmbH, Augsburg;

2 Gew.-Teile Ammoniak, wobei die Gesamtlösung auf einen pH-Wert von 8 eingestellt wurde;

6 Gew.-Teile eines als Schaumstabilisator wirksamen Stearats, mit der Bezeichnung Dicrylan-Stabilisator F gemäß Pfersee-Information ID 707 a/6-78/62, Seiten 1—12 der Firma Chemische Fabrik Pfersee GmbH, Augsburg;

2 Gew.-Teile einer 30%igen wäßrigen Polymethacrylsäure-Dispersion, mit der Bezeichnung »Dicrylan-Verdicker R« gemäß Pfersee Rezeptdienst »Dicrylan Verdicker R« der Firma Chemische Fabrik Pfersee GmbH, Augsburg;

3 Gew.-Teile eines Äthylenharnstoff/Triazin-Harzes, mit der Bezeichnung »Knitex CR« gemäß Pfersee Rezeptdienst K 232 a/3-79/82 der Firma Chemische Fabrik Pfersee GmbH, Augsburg.

Dieses Gemisch wurde ohne Aufschäumung gerührt, bis eine homogene Dispersion erhalten wurde.

### Beispiel 2

Um ein schwarzes Produkt zu erhalten, wurden in die gemäß Beispiel 1 erhaltene Dispersion 7 Gew.-Teile eines schwarzen Farbpigments der Bezeichnung Unisperse-Black gemäß Prospekt Unisperse E p74/4 der Firma Ciba-Geigy (U.K.) Limited eingerührt.

### Beispiel 3

Um ein beiges Produkt zu erhalten, wurde ein Pigmentansatz zubereitet, welcher enthielt:

5 Gew.-Teile    Titandioxid
4 Gew.-Teile    Wasser
0,4 Gew.-Teile  Irgasol DAM (Dispergator für Titandioxid und andere Pigmente zur Dispergierung in Wasser)
4 Gew.-Teile    Unisperse-Yellow-Oxide M-E*)
0,08 Gew.-Teile Unisperse-Black C-E*)
0,08 Gew.-Teile Unisperse-Red RN-E*) (Toluidin)

*) gemäß Prospekt Uniperse E p74/4 der Firma Ciba-Geigy (U.K.) Limited.

Dieser Pigmentansatz wurde der Mischung gemäß Beispiel 1 zugemischt.

### Beispiel 4

Einer Dispersion gemäß Beispiel 1 wurden 5 Gew.-Teile Antimontrioxid und 5 Gew.-Teile Bromspender zur Schwerentflammbarmachung zugesetzt.

## Beispiel 5

Einer Dispersion gemäß Beispiel 1 wurden 100 Gew.-Teile Titandioxid als Füllstoff zugerührt, die vor ihrer Zugabe auf einem Walzenstuhl abgerieben und in Wasser angeteigt wurden.

## Beispiele für die weitere Verarbeitung

## Beispiel 6

Die Dispersionen gemäß den Beispielen 1 bis 5 wurden in einem Schäumgerät unter Luftzufuhr schaumig geschlagen. Der Schaum weist dabei etwa eine »Rasierschaum«-ähnliche Konsistenz auf. Das spezifische Gewicht beträgt ca. 200 g/l.

Die so gewonnenen Schäume wurden aus dem Schäumgerät kommend unmittelbar einer Aufrakelvorrichtung zugeführt, in welcher sie auf ein Polyesterspinnvlies (60 g/m²) aufgerakelt wurden, und zwar in einer Menge von ca. 400 g Schaum/m² Vlies. Beim Aufrakeln drang der Schaum nur oberflächlich in das Vlies ein.

Das Vlies mit dem Schaumauftrag wurde sodann in einem Heizkanal getrocknet, bei einer Anfangstemperatur von 140° C; während einer Verweilzeit von 3 Minuten wird in den folgenden Heizzonen die Temperatur auf 160° C Endtemperaturgesteigert. Nach dem Trocknen war der Schaum nicht mehr klebrig, jedoch noch sehr druckempfindlich; Fingereindrücke gingen nicht zurück.

Das so getrocknete Material wurde sodann im Prägekalander mit heißen Walzen einer Temperatur von ca. 140° C geprägt. Das geprägte Material erwies sich als über beliebig lange Zeit lagerfähig. Zuschnitte des geprägten Materials wurden in einer Presse mit kalten Werkzeugen mit einer auf ca. 180° C eingestellten POHM-Platte (Holzmehlanteil ca. 50%, Polypropylenanteil ca. 50%) verpreßt. Dabei wurde die POHM-Platte dreidimensional verformt, so daß die Dekorschicht sich auch über konkav gekrümmte Oberflächenbereiche der POHM-Platte erstreckte. Die Verweilzeit in der Presse betrug 30 bis 45 Sekunden. Nach der Pressung wurde festgestellt, daß der Schaum druckunempfindlich geworden war und auch die Narbung aus der vorhergehenden Prägung erhalten geblieben war und nicht mehr durch Fingerdruck zerstört werden konnte. Das Aussehen der Oberfläche war gleichmäßig matt. Beim Pressen traten keine Blasen zwischen POHM-Platte und Dekorschicht auf. Dies ist teilweise auf die Luftabführung durch das Vlies, zumindest teilweise aber auch auf die Luftdurchlässigkeit des Schaumes während des Pressens zurückzuführen.

Bei einer 16stündigen Wärmelagerung von 90° C Umluft wurden auch in den konkav ausgeformten Oberflächenbereichen keinerlei Ablösungserscheinungen der Dekorschicht von der POHM-Platte festgestellt.

## Beispiel 7

Das gemäß Beispiel 6 aus dem Heizkanal kommende Material blieb nach einer Verfahrensalternative zunächst ungeprägt und erwies sich ebenfalls als über beliebig lange Zeit lagerfähig. Zuschnitte des ungeprägten Materials wurden in einer Presse mit heißem, auf 140° C eingestelltem Prägewerkzeug mit einer auf ca. 180° C eingestellten POHM-Platte (Holzmehlanteil ca. 50%, Polypropylenanteil ca. 50%) verpreßt. Dabei wurde die POHM-Platte stark dreidimensional verformt, so daß die Dekorschicht sich auch über die konkav gekrümmten Oberflächenbereiche der POHM-Platte erstreckte. Die Verweilzeit in der Presse betrug 60 bis 90 Sekunden. Nach der Pressung wurde festgestellt, daß der Schaum druckunempfindlich geworden war und eine Narbung als Abdruck des Prägewerkzeugs entstanden war. Beim Pressen traten auch hier keine Blasen zwischen der POHM-Platte und Dekorschicht auf. Feinste Strukturen des Prägewerkzeugs wurden in der Narbung wiedergegeben. Die Prägung in der Presse erwies sich auch deshalb besonders vorteilhaft, weil man dabei das Prägemuster an die dreidmensionale Form anpassen konnte; z. B. konnten Steppnähte und Faltenwurf an der richtigen Stelle der dreidimensionalen Form angebracht werden.

## Patentansprüche

1. Verfahren zur Herstellung eines räumlich geformten Formkörpers, bestehend aus einer thermoplastisches Bindemittel enthaltenden Trägerplatte und einer auf einer Seite der Trägerplatte aufgebrachten, sichtseitig gegebenenfalls geprägten Dekorschicht, welche mit der Trägerplatte unter Vermittlung einer mit sowohl in der Trägerplatte als auch in der Dekorschicht verankerten Bahn verbunden ist, wobei zunächst ein Verbundmaterial aus dem Material der Dekorschicht und der Bahn hergestellt wird und hierauf dieses Verbundmaterial mit der erhitzten Trägerplatte in einem Preßwerkzeug gemeinsam verformt wird unter Herstellung der Verbindung des Verbundmaterials mit der Trägerplatte und unter Ausgleich etwaiger Lufteinschlüsse durch die Bahn, dadurch gekennzeichnet, daß man eine nach Art eines Faservlieses luftdurchlässige, ohne wesentliche Rückstellkräfte räumlich gut verformbare und ein oberflächliches Eindringen eines Schaumes gestattende Bahn verwendet und die Dekorschicht aus einem vernetzbaren, vorgeschäumten Schaum durch Trocknen und Vernetzen des Schaums unter Wärmeeinwirkung bildet, indem man zur Herstellung des Verbundmaterials den vorgeschäumten Schaum als Schicht in der Weise auf die Bahn aufträgt, so daß er oberflächlich eindringt, die Schaumschicht trocknet und dabei allenfalls teilweise vernetzt, und daß man beim Pressen durch die Wärme der erhitzten Trägerplatte die Vernetzung bzw. die weitergehende Vernetzung vornimmt, wobei man die etwaige Prägung der Schaumstoffoberfäche vor oder bei dem Pressen bewirkt.

2. Verfahren nach Anspruch 1, dadurch gekennzeichnet, daß man einen Acrylatschaum verwendet.

3. Verfahren nach Anspruch 2, dadurch gekennzeichnet, daß man einen Acrylatschaum verwendet, der durch Aufschäumen einer wäßrigen Dispersion eines thermisch vernetzbaren Polyacrylsäureesters hergestellt ist und der gegebenenfalls ammoniakalische Vernetzungsmittel und/oder Verdicker und/oder Verschäumer und/oder Schaumstabilisatoren und/oder Farbpigmente und/oder Füller und/oder ein Äthylenharnstoff/Triazinharz enthält.

4. Verfahren nach einem der Ansprüche 1 bis 3, dadurch gekennzeichnet, daß man einen Schaum verwendet, dessen Aufschäumung im wesentlichen durch mechanische Behandlung bewirkt worden ist.

5. Verfahren nach einem der Ansprüche 1 bis 4, dadurch gekennzeichnet, daß man ein Synthesefaservlies, insbesondere ein Polyesterspinnvlies oder Polypropylenfaservlies verwendet.

6. Verfahren nach einem der Ansprüche 1 bis 5, dadurch gekennzeichnet, daß man ein Faservlies verwendet, in welchem mindestens ein Teil der Fasern sich senkrecht zur Bahnebene erstrecken, insbesondere ein Nadelvlies.

7. Verfahren nach einem der Ansprüche 1 bis 6, dadurch gekennzeichnet, daß man eine Trägerplatte verwendet, welche unter Verwendung eines Polyolefins als Bindemittel und eines Cellulosematerials als Füller hergestellt worden ist, vorzugsweise mit einem Gehalt von ca. 50 Gew.-% Polypropylen und ca. 50 Gew.-% Holzmehl.

8. Verfahren nach einem der Ansprüche 1 bis 7, dadurch gekennzeichnet, daß man auf der Rückseite des Faservlieses und/oder auf der Dekorseite der Trägerplatte einen Haftvermittler aufträgt.

9. Verfahren nach einem der Ansprüche 1 bis 7, dadurch gekennzeichnet, daß man unter Verzicht auf einen Haftvermittler die Verbindung des Faservlieses mit der Trägerplatte durch die Adhäsion des Faservlieses an der Trägerplatte bewirkt.

10. Verfahren nach einem der Ansprüche 1 bis 9, dadurch gekennzeichnet, daß man nach dem Trocknen eine Prägebehandlung der Schaumoberfläche mittels einer heißen Prägewalze vornimmt, wobei man dann für das Pressen mindestens auf der Dekorseite ein kaltes Preßwerkzeug verwendet.

11. Verfahren nach einem der Ansprüche 1 bis 10, dadurch gekennzeichnet, daß man beim Pressen zur Prägung der Oberfläche zumindest auf der Dekorseite ein heißes Prägewerkzeug verwendet.


## Claims

1. Method for the production of a spatially formed moulded boy, consisting of a carrier board containing a thermoplastic binding agent and of a decorative layer which is applied on to one side of the carrier board, which is optionally embossed on the visible side and which is joined to the carrier board by means of a web in the carrier board and in the decorative layer, wherein initially a composite material is produced from the material of the decorative layer and from the web and then this composite material is deformed together with the heated carrier board in a press tool, thus producing the bonding of the composite material to the carrier board and thus compensating for any air trapped by the web, characterised in that a web is used which is air-permeable in the manner of a fibre-fleece, which is satisfactorily deformable three-dimensionally without substantial restoring forces and which allows surface penetration of a foam, and the decorative layer is formed from a cross-linkable, prefoamed foam by drying and cross-linking of the foam under the action of heat, while to produce the composite material the prefoamed foam is applied as a layer on to the web in such a way that it penetrates superficially, the foam layer dries and is possibly partially cross-linked at the same time, and that the cross-linking or the continued cross-linking is effected during pressing by the heat of the heated carrier board, any embossing of the foam material upper surface being carried out before or during pressing.

2. Method according to Claim 1, characterised in that an acrylate foam is used.

3. Method according to Claim 2, characterised in that an acrylate foam is used which is produced by foaming an aqueous dispersion of a thermally cross-linkable polyacrylic acid ester and which, optionally, contains ammoniacal cross-linking agents and/or thickeners and/or foaming agents and/or foam stabilizers and/or colouring pigments and/or fillers and/or an ethylene urea/triazine resin.

4. Method according to one of Claims 1 to 3, characterised in that a foam is used, the foaming of which is effected substantially by mechanical treatment.

5. Method according to one of Claims 1 to 4, characterised in that a synthetic fibre-fleece is used, in particular a polyester spun fleece or polypropylene fibre-fleece.

6. Method according to one of Claims 1 to 5, characterised in that a fibre-fleece is used in which at least a portion of the fibres extend perpendicularly to the web plane, in paricular a needle fleece.

7. Method according to one of Claims 1 to 6, characterised in that a carrier board is used which has been produced using a polyolefin as binder and a cellulose material as filler, preferably with a content of about 50% by weight of polypropylene and about 50% by weight of wood flour.

8. Method according to one of Claims 1 to 7, characterised in that an adhesive agent is applied on to the rear side of the fibre-fleece and/or on to the decorative side of the carrier board.

9. Method according to one of Claims 1 to 7, characterised in that, with the omission of an adhesive agent, the bonding of the fibre-fleece to the carrier board is effected by adhesion of the fibre-fleece to the carrier board.

10. Method according to one of Claims 1 to 9, characterised in that, after drying, an embossing treatment of the foam upper surface is effected by means of a hot embossing roller, a cold press tool then being used for the pressing operation at least on the decorative side.

11. Method according to one of Claim 1 to 10, characterised in that during the pressing for embossing the upper surface a hot embossing tool is used at least on the decorative side.


## Revendications

1. Procédé de fabrication d'un corps formé tridimensionnel, comportant une plaque-support contenant un liant thermoplastique et une couche décorative appliquée sur l'une des faces de la plaque-support et éventuellement gaufré sur la face visible, ladite couche décorative étant liée à la plaque-support par l'intermédiaire d'une bande solidaire aussi bien de la plaque-support que de la couche décorative, procédé dans lequel on fabrique d'abord un matériau complexe à partier du matériau de la couche décorative et de la bande et ensuite on forme ce matériau complexe avec la plaque-support chauffée dans un outil de pressage avec obtention de la liaison du matériau complexe avec la plaque-support et compensation des éventuelles bulles d'air par la bande, caractérisé en ce que l'on utilise une bande perméable à l'air à la façon d'un voile de fibres, bien déformable tridimensionnellement sans force de retour, et permettant une pénétration superficielle d'une mousse, en ce que l'on forme la couche decorative à partier d'une mousse réticulable prémoussée, par séchage et réticulation de la mousse sous l'action de la chaleur, tandis que, pour la fabrication du matériau complexe, on dépose la mousse prémoussée sous forme de couche sur la bande de telle manière qu'elle pénètre superficiellement, que l'on sèche la mousse, ce qui la réticule éventuellement en partie et en ce que l'on effectue, par pressage thermique de la plaque-support chauffée, la réticulation, ou que l'on poursuit cette réticulation, l'éventuel gaufrage de la surface de la mousse étant effectuée avant ou lors du pressage.

2. Procédé selon la revendication 1, caractérisé en ce que l'on emploie une mousse d'acrylate.

3. Procédé selon la revendication 2, caractérisé en ce que l'on emploie une mousse d'acrylate qui est fabriquée par moussage d'une dispersion aqueuse d'un ester d'acide polyacrylique thermiquement réticulable et d'un agent de réticulation éventuellement ammoniacal et qui contient éventuellement un épaississant et/ou un agent de moussage, et/ou un stabilisateur de mousse et/ou un pigment coloré et/ou un agent de remplissage et/ou une résine éthylèneurée/triazine.

4. Procédé selon l'une quelconque des revendications 1 à 3, caractérisé en ce qu'on emploie une mousse dont le moussage est essentiellement obtenu par un procédé mécanique.

5. Procédé selon l'une quelconque des revendications 1 à 4, caractérisé en ce qu'on emploie un voile de fibres synthétiques, spécialement un voile de filés de polyester ou un voile de fibres de polypropylen.

6. Procédé selon l'une quelconque des revendications 1 à 5, caractérisé en ce qu'on emploe un voile de fibres dans lequel au moins une partie des fibres sont perpendiculaires au plan de la bande, spécialement un voile aiguilleté.

7. Procédé selon l'une quelconque des revendications 1 à 6, caractérisé en ce qu'on emploie une plaque-support qui est obtenue par utilisation d'une polyoléfine comme agent liant et d'un matériau cellulosique comme produit de remplissage, de préférence avec une teneur d'environ 50% en poids de polypropylène et d'environ 50% en poids de farine de bois.

8. Procédé selon l'une quelconque des revendications 1 à 7, caractérisé en ce qu'on dépose sur l'envers du voile de fibres et/ou sur la face décorative de la plaque-support un intermédiaire d'adhésion.

9. Procédé selon l'une quelconque des revendications 1 à 7, caractérisé en ce qu'on n'utilise pas d'intermédiaire d'adhésion et la liaison entre le voile de fibres et la plaque-support est assurée par l'adhésion du voile de fibres et de la plaque-support.

10. Procédé selon l'une quelconque des revendications 1 à 9, caractérisé en ce qu'on effectue, après séchage, un gaufrage de la surface de la mousse au moyen d'un rouleau de gaufrage chaud alors que l'on utilise, pour le pressage, au moins de côté décoratif, un outil de presse froid.

11. Procédé selon l'une quelconque des revendications 1 à 10, caractérisé en ce qu'on utilise pour le pressage pour gaufrage de la surface, au moins du côté décoratif, un outil de presse chauffé.

FIG.1

FIG.2

FIG.3

0 016 398